Europäisches Patentamt

European Patent Office

Office européen des brevets

(19)

(11) **EP 1 390 321 B1**

(12) **EUROPÄISCHE PATENTSCHRIFT**

(45) Veröffentlichungstag und Bekanntmachung des Hinweises auf die Patenterteilung:
**13.10.2004   Patentblatt 2004/42**

(21) Anmeldenummer: 02732519.0

(22) Anmeldetag: **22.03.2002**

(51) Int Cl.[7]: **C04B 41/88**, C22C 1/10

(86) Internationale Anmeldenummer:
**PCT/EP2002/003232**

(87) Internationale Veröffentlichungsnummer:
**WO 2002/096829 (05.12.2002 Gazette 2002/49)**

(54) **METALL-KERAMIK-VERBUNDWERKSTOFF UND VERFAHREN ZU DESSEN HERSTELLUNG**

METAL-CERAMIC COMPOSITE MATERIAL AND METHOD FOR PRODUCTION THEREOF

MATERIAU COMPOSITE METAL-CERAMIQUE ET PROCEDE DE PRODUCTION DUDIT MATERIAU

(84) Benannte Vertragsstaaten:
**DE FR GB IT**

(30) Priorität: **26.05.2001  DE 10125814**

(43) Veröffentlichungstag der Anmeldung:
**25.02.2004   Patentblatt 2004/09**

(73) Patentinhaber: **DaimlerChrysler AG
70567 Stuttgart (DE)**

(72) Erfinder:
 • SCHEYDECKER, Michael
  89278 Nersingen (DE)
 • TSCHIRGE, Tanja
  73033 Göppingen (DE)
 • WALTERS, Markus
  71069 Sindelfingen (DE)
 • WEISSKOPF, Karl-Ludwig
  73635 Rudersberg (DE)

(56) Entgegenhaltungen:
 DE-A- 19 750 599          GB-A- 1 439 329

**Beschreibung**

Die Erfindung betrifft einen Metall-Keramik-Verbundwerkstoff nach dem Oberbegriff des Patentanspruchs 1 und ein Verfahren zur Herstellung eines Metall-Keramik-Verbundwerkstoffs nach dem Oberbegriff des Patentanspruchs 9.

Aus der EP 739 668 A2 ist eine Zylinderlaufbuchse aus einem Metall-Keramik-Verbundwerkstoff bekannt. Diese Zylinderlaufbuchse wird hergestellt, indem eine poröse keramische Preform aus einem keramischen Pulver und keramischen Fasern auf konventionelle Weise erzeugt wird und anschließend mit einem flüssigen Metall infiltriert wird. Die so entstandene Zylinderlaufbuchse wird nun als Kern in ein Gießwerkzeug eingesetzt und mit flüssigem Metall umgossen. Das hieraus resultierende Bauteil ist ein Zylindergehäuse, das lokal im Bereich der Laufbuchse durch den Verbundwerkstoff verstärkt ist.

Der Nachteil derartiger Verbundwerkstoffe ist die mikroskopische Anbindung zwischen der Preform und der metallischen Phase. Die keramische Preform bildet im Verbundwerkstoff die sogenannte Matrix des Verbundwerkstoffes. Durch nicht optimale Benetzung zwischen der Oberfläche der Matrix und der metallischen Phase (Grenzfläche) wird die theoretische Festigkeit der Werkstoffe nicht erreicht. Ferner weisen derartige Verbundwerkstoffe in allen Volumenrichtungen ein sprödes Bruchverhalten auf, das durch die keramische Matrix bestimmt wird und durch die metallische Phase nicht befriedigend kompensiert werden kann.

Die DE 197 50 599 A1 beschreibt einen Verbundwerkstoff, der aus Aluminiden (intermetallische Verbindungen des Aluminiums) und Aluminiumoxid besteht. Dabei treten insbesondere Titanaluminide auf, die eine dreidimensionale, tragende Phase bilden. Dieser Werkstoff ist ausgesprochen hochtemperaturbeständig, weist jedoch auf Grund des hohen Anteils an Aluminiden eine hohe Sprödigkeit auf. Zudem sinkt die Wärmeleitfähigkeit nahezu auf keramisches Niveau ab.

Die Aufgabe der Erfindung besteht darin, einen Metall-Keramik-Verbundwerkstoff bereitzustellen, der gegenüber dem Stand der Technik eine verbesserte Anbindung zwischen einer keramischen Matrix und metallischen Phasen aufweist und sich durch eine höhere Duktilität und Wärmeleitfähigkeit auszeichnet.

Die Lösung der Aufgabe besteht in einem Metall-Keramik-Verbundwerkstoff nach Patentanspruch 1 und in einem Verfahren zu dessen Herstellung nach Patentanspruch 9.

Der erfindungsgemäße Metall-Keramik-Verbundwerkstoff (im Folgenden vereinfachend Verbundwerkstoff genannt) nach Patentanspruch 1 ist aus einer tragenden, porösen keramischen Matrix aufgebaut, die von einer metallischen Phase durchzogen ist. Dabei sind jeweils die keramische Matrix als auch die metallische Phase in sich dreidimensional vernetzt. Zusammen bilden sie einen nahezu dichten, monolithischen Verbundwerkstoff.

Von Bedeutung ist hierbei, dass an den Oberflächen von keramischen Körnern, die die keramische Matrix bilden, eine Zwischenschicht zur Metallischen Phase besteht. Diese Zwischenschicht besteht aus Reaktionsprodukten der keramischen Matrix und der metallischen Phase. Sie entsteht somit während der Herstellung des Verbundwerkstoffs und bindet Metall und Keramik mikroskopisch fest aneinander und führt zu einer deutlichen Festigkeitssteigerung.

Das Metall der metallischen Phase bleibt im Wesentlichen in seiner Form und seinen Eigenschaften erhalten, da die verbindende Zwischenschicht eine sehr geringe Ausdehnung aufweist, die zwischen 10 nm und 100 nm, bevorzugt bei 40 nm liegt.

Als Metall ist Aluminium bzw. eine Aluminiumlegierung besonders zweckmäßig. Es weist eine hohe Duktilität, eine hohe Bruchdehnung und eine hohe Wärmeleitfähigkeit auf. Zusätzlich hat Aluminium ein niedriges spezifisches Gewicht und lässt sich bei niedrigen Temperaturen verarbeiten. Besonders wichtig ist jedoch die Affinität des Aluminiums mit vielen keramischen Verbindungen Reaktionen einzugehen und dabei intermetallischen Phasen in Form von Aluminiden zu bilden (Anspruch 2).

Enthält das Aluminium Magnesium als Legierungsanteil, schadet dies der Bildung der Zwischenschicht, da Magnesium keine vorteilhaften intermetallischen Phasen ausbildet. Die Festigkeit des Verbundwerkstoffes kann bei Verwendung von Aluminium-Magnesium-Legierungen sinken. Deshalb werden bevorzugt Aluminium-Silizium Legierungen verwendet, die besonders bevorzugt nahe am Eutektikum von Aluminium und Silizium liegen. Silizium bildet ebenfalls intermetallische Phasen - Silizide - die sich positiv auf die Bildung der Zwischenschicht auswirken (Anspruch 3). Aluminiumlegierungen werden im Folgenden vereinfachend mit dem Begriff Aluminium mit umfasst.

Zur Darstellung der keramischen Matrix kommen bevorzugt Oxide der Übergangsmetalle zum Einsatz. Ferner sind Siliziumoxide und Borkarbid geeignet. Die Oxide können mehrere Metalle enthalten (Mischoxide wie z. B. Spinell), zudem können auch Mischungen verschiedener Substanzen vorliegen. Derartige keramische Verbindung neigen in erfindungsgemäßer Weise zu Ausbildung einer Zwischenschicht (Anspruch 4).

Wesentlich für die Auswahl der keramischen Matrix ist die Reaktionsfähigkeit mit dem Aluminium. Die keramische Matrix darf nicht vollkommen inert gegenüber dem Aluminium sein, da sonst keine Zwischenschicht ausgebildet wird, die eine kontrollierte Reaktion zwischen Keramik und Aluminium voraussetzt. Andererseits führt eine spontane, vollständige Reaktion zwischen der Keramik und dem flüssigen Aluminium während der Infiltration zu einer Zerstörung des Materials und macht dieses unbrauchbar. Es hat sich erwiesen, dass Titanoxid, insbesondere das $TiO_2$ aber auch

das Ti2O3 besonders geeignet zur Ausbildung einer erfindungsgemäßen Zwischenschicht geeignet ist (Anspruch 5).

Titanoxid reagiert spontan mit dem flüssigen Aluminium, die Reaktivität ist jedoch nicht so hoch, dass unkontrolliert so viel Reaktionsenergie freigesetzt wird, um die Form des Bauteils zu zerstören. Die Reaktion zwischen der Keramik und dem Metall, insbesondere zwischen dem Titanoxid und dem Aluminium läuft nach folgenden Reaktionsschemata ab (ohne Berücksichtigung der Stöchiometriekoeffizienten) :

$$Me_I O + Me_{II} \rightarrow Me_{II}O + Me_I Me_{II} \qquad \text{(Gl. 1)}$$

$$TiO_2 + Al + (Si) \rightarrow Al_2O_3 + Ti_xAl_y + Ti_aSi_b \qquad \text{(Gl. 2)}$$

Die Bezeichnungen stehen für:

| | |
|---|---|
| $Me_I O$: | Oxid des Metalls $Me_I$ |
| $Me_{II}$: | Infiltrationsmetall |
| $Me_{II}O$: | Oxid des Metalls $Me_{II}$ nach einer Austauschreaktion mit $Me_I$ (z. B. Aluminide) |
| $Me_I Me_{II}$: | intermetallische Verbindung |
| $Ti_xAl_y$: | Titanaluminide mit den Koeffizienten x und y |
| $Ti_aSi_b$: | Titansilizide mit den Koeffizienten a und b |

Die Koeffizienten x, y, a und b sind von der Verfügbarkeit der Komponenten während der Reaktion abhängig.

Diese Reaktionen sind lokal begrenzt und beschränken sich erfindungsgemäß auf die an sich sehr dünne Zwischenschicht. Die Zwischenschicht bindet die keramische Matrix und die Metallische Phase sehr fest aneinander, da es sich um eine reaktionsgebundene Verbindung handelt. Diese Bindung trägt entscheidend zur Festigkeitssteigerung des Verbundwerkstoffs bei. Andererseits bleibt das Metall im wesentlichen Teil in seiner Form bestehen, ist dreidimensional vernetzt, wodurch seine positiven Eigenschaften, insbesondere die Duktilität zum Tragen kommt und das spröde Verhalten der keramischen Matrix kompensiert (Anspruch 6).

Besonders vorteilhaft für eine feste Anbindung zwischen der keramischen Matrix und dem Metall und somit für die Festigkeit ist ein großes Oberflächen/Volumen-Verhältnis der keramischen Matrix und der metallischen Phase. Dies führt dazu, dass die erfindungsgemäße Zwischenschicht ebenfalls eine große Oberfläche aufweist, was sich positiv auf die Festigkeit des Werkstoffs auswirkt. Ein wichtiger hierzu beitragender Faktor ist ein geringer Porendurchmesser, der bevorzugt zwischen 0,5 μm und 4 μm liegt (Anspruch 7).

Dieser hängt unmittelbar mit einer feinen Kornverteilung der keramischen Matrix zusammen. Die mittlere Kornverteilung liegt bevorzugt unter einem μm, besonders bevorzugt bei 0,3 μm. Die mittlere Korngröße steht hierbei für den sogenannten $D_{50}$-Wert, der die maximale Häufigkeit der Korngröße beschreibt. Die Breite der Verteilungsfunktion und deren Form kann variieren, so dass auch größere Körner bis 5 μm auftreten können.

Der geringe Porendurchmesser und die feine Korngrößenverteilung führen zu sehr dünnadrigen stark verzweigten Porenkanälen, die durch das Metall gefüllt sind und die keramische Matrix homogen umschließen. Dies wirkt sich positiv auf die Mikrostruktur und auf die Festigkeit des Verbundwerkstoffes aus (Anspruch 8).

Eine weitere Ausgestaltungsform der Erfindung besteht in einem Verfahren zur Herstellung eines Metall-Keramik-Verbundwerkstoffes nach Patentanspruch 9.

Das Verfahren besteht zum einen aus einem Formgebungsprozess, durch den ein poröser keramische Formkörper gebildet wird. Dieser Formkörper wird im Weiteren mit einem flüssigen Metall infiltriert, wobei es zu einer Reaktion an der Oberfläche von Keramikpartikeln des Formkörpers kommt. Bei dieser Reaktion entsteht eine dünne Zwischenschicht zwischen dem Metall und der keramischen Matrix. Als Endprodukt des Verfahrens liegt ein homogener nahezu dichter Verbundwerkstoff vor.

Zur Formgebung hat es sich als besonders zweckmäßig herausgestellt, die feinen Körner des keramischen Pulvers zu Agglomeraten zusammenzufügen. Derartige Agglomerate weisen bevorzugt einen Durchmesser von 5 μm bis 50 μm auf. Die Agglomeration kann durch Sprühen aus einer Suspension oder durch Mischen unter Zusatz eines flüssigen Hilfsmittels (z. B. Wasser) erfolgen (Anspruch 10).

Durch diese Verfahren erhält man ein rieselfähiges agglomeriertes Pulver, das in eine Pressform geschüttet werden kann und dort homogen, z. B. durch Einrütteln verteilt und verdichtet werden kann. Beim Pressvorgange brechen die relativ weichen Agglomerate auf und werden zu einen mikroporösen Körper zusammengepresst. Prinzipiell können alle keramischen Formgebungsverfahren angewendet werden, wie z. B. auch Schlickerguss, durch das Pressen erzielt man jedoch bei den meisten Geometrien die höchste Wirtschaftlichkeit (Anspruch 11).

Die Infiltration des porösen keramischen Formkörpers kann ebenso durch verschiedene Methoden erfolgen.

Zum einen kann die spontane Infiltration über die Kapillarkräfte erfolgen. Hierfür ist nur ein geringer technischer Aufwand erforderlich, die Keramik muss jedoch durch das flüssige Metall benetzt werden, was nicht in allen Materialkombinationen der Fall ist. Eine weitere Infiltrationsmethode besteht in der Gasdruckinfiltration. Diese kann angewendet werden, wenn die Kapillarkräfte nicht für eine spontane Infiltration ausreichen. Der Verbundwerkstoff ist bei der Gasdruckinfiltration einem isostatischen Druck ausgesetzt, was besonders schonend für komplexe Bauteile ist. Der technische Aufwand ist vergleichbar hoch, die erzielbare Stückzahl bzw. der Durchsatz sehr gering.

Die wirtschaftlich zweckmäßigste Methode zur Infiltration ist die Infiltration im Druckguss. Unter Druckguss werden hierbei alle Verfahren verstanden, bei dem in einer Dauergießform der Formkörper eingelegt wird und flüssiges Metall in die Gießform unter Druck eingeleitet wird. Hierunter fallen sowohl der herkömmliche Druckguss als auch das Squeeze Casting oder Niederdruckgussverfahren. Der aufgewendete Druck beträgt mindestens ein bar. Der wesentliche Vorteil des Druckgusses oder des Squeeze Castens besteht neben den geringen Taktzeiten und dem großserientauglichen Verfahren darin, dass die Infiltration sehr schnell vonstatten geht (< 1s). Die Berührungszeit des flüssigen Metalls mit der keramischen Matrix ist hierbei so kurz, dass sich gerade die erfindungsgemäße Zwischenschicht ausbilden kann. Die Berührungszeit beträgt bis zu 10 s, bevorzugt ca. 5 s bis zu einer Erstarrung des Aluminiums an der Keramikoberfläche. Die vollständige Erstarrung des Aluminiums benötigt etwa 15 s - 20 s. Wenn das Metall im flüssigen Zustand länger verweilt oder eine Gießtemperatur über 750°C liegt, besteht die Gefahr einer unkontrollierten Reaktion zwischen den Komponenten (Anspruche 12).

Derartige Verbundwerkstoffe finden Anwendung bei besonders mechanisch belasteten und tribologisch beanspruchten Bauteilen, insbesondere in Verbrennungsmotoren und Getrieben z. B. als Lagerwerksoffe oder Gleitsteinen, als Kühlkörper, Bremsscheibe oder mechanische Lader.

Im Folgenden werden bevorzugte Ausgestaltungsformen der Erfindung an Hand einer Figur und an Hand von zwei Beispielen beschrieben.

Die einzige Figur zeigt eine schematische Darstellung eines Mikrogefüges des erfindungsgemäßen Verbundwerkstoffs.

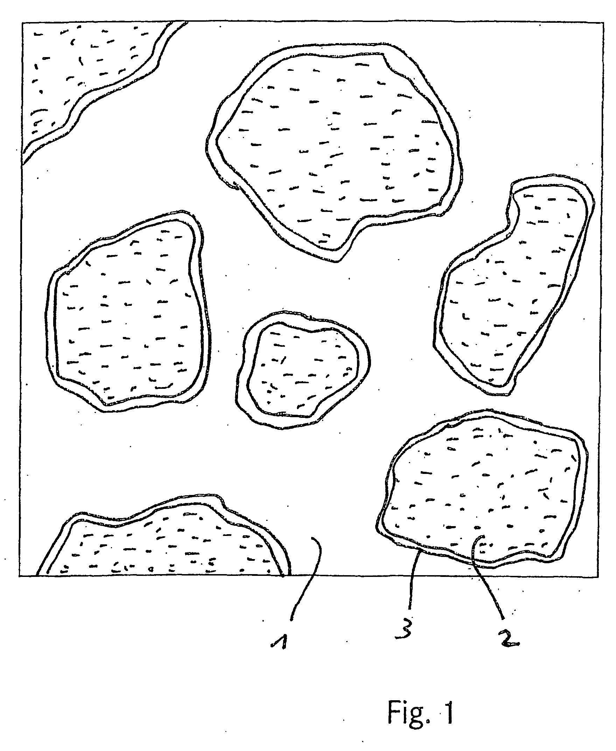

Die Kantenlänge des Gefügeausschnitts in Fig. 1 beträgt ca. 1 µm. Das Gefüge enthält eine Aluminiumphase 1 und eine keramische Matrix 2. Die Partikel der keramischen Matrix 2 bestehen aus Titanoxid und sie sind von einer erfindungsgemäßen Zwischenschicht 3 überzogen, die eine Trennschicht zwischen dem Aluminium 1 und dem Titanoxid 2 darstellt. Die Zwischenschicht besteht 3 aus Titanaluminiden wie TiA13 und TiA1, sowie aus Aluminiumoxid. Die Titanoxid-Partikel 2 bilden ein dreidimensionales Gerüst, das von Porenkanälen durchzogen ist. Die Porenkanäle sind wiederum im Verbundwerkstoff mit Aluminium 1 gefüllt. In Fig. 1 liegt eine zweidimensionale Darstellung des Gefüges vor, weshalb der Anschein erweckt wird, dass sich die Titanoxid-Partikel 2 nicht berühren. Im dreidimensionalen Gefüge sind die Titanoxid-Partikel 2 je nach Vorbehandlung des Formkörpers entweder mechanisch verklammert (bei gepressten Formkörpern) oder sie sind über Sinterhälse (gepresste und gesinterte Formkörper) miteinander verbunden.

Das erfindungsgemäße Verfahren wird durch die folgenden Beispiele beschrieben.

Beispiel 1

Eine Suspension aus Titanoxid-Partikeln, die eine mittlere Korngröße von 0,3 µm aufweisen, wird sprühgetrocknet, wobei sich Agglomerate mit einer Größe zwischen 10 µm und 20 µm ausbilden. Diese Agglomerate werden in eine zylinderförmige Pressform mit einem Durchmesser von 100 mm gegeben, durch Vibration vorverdichtet und mit 200 kN gepresst. Der gepresste Formkörper wird entformt und bei 1150°C eine Stunde unter Luft gesintert. Diese Sinterung führt zu der Ausbildung von Sinterhälsen zwischen den Titanoxid-Partikeln. Dies trägt zur Festigung des Formkörpers bei und bewahrt die offene Porosität des Formkörpers, die etwa 55 % beträgt.

Der Formkörper wird auf der Drehmaschine bearbeitet und in eine definierte Geometrie gebracht. Die Geometrie des Formkörpers ist so abgestimmt, dass er mit einer Toleranz von 0,5 mm in eine Druckgusswerkzeug eingelegt und fixiert werden kann. Vor dem Einlegen wird der Formkörper auf ca. 600°C vorgeheizt.

Das Druckgusswerkzeug weist einen Gießlauf, einen Anschnitt und einen Formhohlraum auf. Es ist so ausgelegt dass der Formhohlraum, in dem sich der Formkörper befindet Zwischenräume aufweist, die mit Aluminium gefüllt werden und von denen aus die Infiltration des Formkörpers gespeist wird. Die Zwischenräume werden entweder nach dem Gießvorgang spanend abgearbeitet oder sie stellen ein Bauteil dar, das durch den erfindungsgemäßen Verbundwerkstoff lokal verstärkt ist.

Während des Gieß- und Infiltrationsprozesses wird das Gießwerkzeug mit Aluminium (Schmelztemperatur von 680°C, Legierung Al-Si12) gefüllt. Während des Füllvorgangs wird innerhalb einer Zeit von 200 ms die Geschwindigkeit eines Gießkolbens, durch den die Befüllung vorangetrieben wird, von 0,1 m/s auf 3 m/s beschleunigt. Nach der vollständigen Befüllung des Gießwerkzeugs mit dem Aluminium baut sich in ca. 200 ms ein Druck von ca. 800 bar auf. Durch diesen Druck wird das noch flüssige Aluminium in die Poren des keramischen Formkörpers gepresst bzw. infiltriert.

Während des Infiltrierens reagiert das flüssige Aluminium mit der Oberfläche der Titanoxid-Partikel nach der genannten Reaktionsgleichung (Gl. 2). Durch das Abkühlen der Aluminiumschmelze an der Partikeloberfläche wird die Reaktion gestoppt.

Die Temperatur der Aluminiumschmelze und die Vorheiztemperatur des Formkörpers sind wichtige Parameter, durch die die Reaktion und die Beschaffenheit der erfindungsgemäßen Zwischenschicht beeinflusst werden können. Die Vorheiztemperatur beträgt zwischen 400°C und 600°C, die Temperatur der Aluminiumschmelze zwischen 580°C und 720°C. Die optimale Kombination dieser Temperaturintervalle hängt von der Zusammensetzung, der Geometrie und der Mikrostruktur des Formkörpers ab.

Der so dargestellte Verbundwerkstoff weist eine Vier-Punkt-Biegefestigkeit $\sigma_B$ von 390 MPa bei einer Dehnung $\varepsilon$ von 0,4 % auf.

Beispiel 2

Ein keramischer Schlicker aus Borkarbid wird in eine quaderförmige Form (120x90x20 mm) gegossen und getrocknet. Anschließend werden organische Schlickerzusätze durch thermische Behandlung von ca. 600°C ausgebrannt und so die erforderliche Porosität des Formkörpers eingestellt. Der Formkörper weist eine zur Handhabung ausreichende Festigkeit auf. Dieser Formkörper wird in eine Metallform mit einer Öffnung gespannt und in ein Gasdruckinfiltrationsanlage mit einem geschlossenen Rezipienten gegeben. In ca. 20 min wird der Rezipient evakuiert und ein Stickstoff-Druck von ca. 100 bar aufgebaut. Aluminiumgranulat wird im Rezipienten durch Widerstandsbeheizung aufgeschmolzen und auf Grund des vorherrschenden Druckes durch ein Steigrohr in die Öffnung der Metallform und in den Formkörper gepresst.

Das flüssige Metall infiltriert den porösen Formkörper, wobei analog dem Beispiel 1 eine Reaktion an der Oberfläche der Borkarbid-Partikel stattfindet. Die Reaktionsprodukte sind Aluminiumboride. Die Wirkungsweise der Zwischenschicht ist analog der im Beispiel 1 und der Figur 1. Der Infiltrationsvorgang benötigt etwa 5 min, der Gesamtprozess ca. 45 min.

**Patentansprüche**

1.  Metall-Keramik-Verbundwerkstoff mit einer keramischen Matrix und wenigstens einer metallischen Phase, die voneinander durchdrungen sind, die zusammen einen nahezu dichten Körper bilden und an Grenzflächen miteinander in Berührung stehen
    **dadurch gekennzeichnet, dass**

    -   der Verbundwerkstoff zwischen der metallischen Phase und der keramischen Phase eine Zwischenschicht aufweist,
    -   die Zwischenschicht eine Dicke zwischen 10 nm und 100 nm aufweist und
    -   die Zwischenschicht aus Reaktionsprodukten der Metallischen Phase und der keramischen Phase besteht.

2.  Metall-Keramik-Verbundwerkstoff nach Anspruch 1,
    **dadurch gekennzeichnet, dass**
    die metallische Phase aus Aluminium oder einer Aluminiumlegierung besteht.

3.  Metall-Keramik-Verbundwerkstoff nach Anspruch 1 oder 2,
    **dadurch gekennzeichnet, dass**
    die metallische Phase eine magnesiumfreie Aluminiumlegierung ist.

4.  Metall-Keramik-Verbundwerkstoff nach einem der vorhergehenden Ansprüche,
    **dadurch gekennzeichnet, dass**
    die keramische Matrix mindestens ein Oxid eines Übergansmetalls oder des Siliziums oder Borkarbid enthält.

5.  Metall-Keramik-Verbundwerkstoff nach einem der vorhergehenden Ansprüche,
    **dadurch gekennzeichnet, dass**
    die keramische Matrix Titanoxid enthält.

6.  Metall-Keramik-Verbundwerkstoff nach einem der vorhergehenden Ansprüche,
    **dadurch gekennzeichnet, dass**
    die Zwischenschicht Titanaluminide enthält.

**7.** Metall-Keramik-Verbundwerkstoff nach einem der vorhergehenden Ansprüche,
**dadurch gekennzeichnet, dass**
Poren der keramischen Matrix, die durch die metallische Phase gefüllt sind, einen Porenradius zwischen 0,5 µm und 4 µm aufweisen.

**8.** Metall-Keramik-Verbundwerkstoff nach einem der vorhergehenden Ansprüche,
**dadurch gekennzeichnet, dass**
Körner der keramischen Matrix eine mittlere Korngröße von 0,3 µm aufweisen.

**9.** Verfahren zur Herstellung eines Metall-Keramik-Verbundwerkstoffes nach einem der vorhergehenden Ansprüche, umfassend folgende Schritte:

- Formgebung eines keramischen Pulvers zu einen porösen keramischen Formkörper,
- infiltrieren des Formkörpers mit flüssigem Metall,
- Reaktion zwischen den keramischen Partikeln und dem flüssigen Metall zur
- Bildung einer Zwischenschicht,. die Reaktionsprodukte des keramischen Formkörpers und des Metalls enthält,
- wobei eine Berührungszeit zwischen dem flüssigen Metall und den keramischen Partikeln kürzer als 10 s ist.

**10.** Verfahren nach Anspruch 9
**dadurch gekennzeichnet, dass**
das keramische Pulver zu Agglomeraten mit einem Durchmesser zwischen 5 µm und 50 µm agglomeriert wird.

**11.** Verfahren nach Anspruch 9 oder 10,
**dadurch gekennzeichnet, dass**
die Formgebung des Formkörpers durch Pressen erfolgt.

**12.** Verfahren nach einem der Ansprüche 9 bis 11,
**dadurch gekennzeichnet, dass**
die Infiltration in einem Druckgusswerkzeug unter Druck erfolgt .

**Claims**

**1.** Metal-ceramic composite material having a ceramic matrix and at least one metallic phase, which are intermingled with one another, together form a virtually completely dense body and are in contact with one another at interfaces,
**characterized in that**

- the composite material has an interlayer between the metallic phase and the ceramic phase,
- the interlayer has a thickness of between 10 nm and 100 nm and
- the interlayer consists of reaction products of the metallic phase and the ceramic phase.

**2.** Metal-ceramic composite material according to Claim 1, **characterized in that** the metallic phase consists of aluminium or an aluminium alloy.

**3.** Metal-ceramic composite material according to Claim 1 or 2, **characterized in that** the metallic phase is a magnesium-free aluminium alloy.

**4.** Metal-ceramic composite material according to one of the preceding claims, **characterized in that** the ceramic matrix contains at least one oxide of a transition metal or of silicon or boron carbide.

**5.** Metal-ceramic composite material according to one of the preceding claims, **characterized in that** the ceramic matrix contains titanium oxide.

**6.** Metal-ceramic composite material according to one of the preceding claims, **characterized in that** the interlayer contains titanium aluminides.

**7.** Metal-ceramic composite material according to one of the preceding claims, **characterized in that** pores in the ceramic matrix, which are filled by the metallic phase, have a pore radius of between 0.5 µm and 4 µm.

**8.** Metal-ceramic composite material according to one of the preceding claims, **characterized in that** grains of the ceramic matrix have a mean grain size of 0.3 µm.

**9.** Process for producing a metal-ceramic composite material according to one of the preceding claims, comprising the following steps:

- shaping of a ceramic powder to form a porous ceramic shaped body,
- infiltration of the shaped body with liquid metal,
- reaction between the ceramic particles and the liquid metal to
- form an interlayer which contains reaction products of the ceramic shaped body and the metal,
- with a contact time between the liquid metal and the ceramic particles being less than 10 s.

**10.** Process according to Claim 9, **characterized in that** the ceramic powder is agglomerated to form agglomerates with a diameter of between 5 µm and 50 µm.

**11.** Process according to Claim 9 or 10, **characterized in that** the shaped body is shaped by pressing.

**12.** Process according to one of Claims 9 to 11, **characterized in that** the infiltration is carried out under pressure in a pressure die-casting die.

**Revendications**

**1.** Matériau composite de métal et de céramique avec une matrice céramique et au moins une phase métallique qui s'interpénètrent mutuellement, qui forment ensemble un corps presque compact et qui sont en contact mutuel sur des surfaces frontières,
**caractérisé en ce que**

- le matériau composite présente une couche intermédiaire entre la phase métallique et la phase céramique,
- la couche intermédiaire a une épaisseur comprise entre 10 nm et 100 nm et
- la couche intermédiaire est constituée de produits de réaction de la phase métallique et de la phase céramique.

**2.** Matériau composite de métal et de céramique selon la revendication 1, **caractérisé en ce que** la phase métallique est constituée d'aluminium ou d'un alliage d'aluminium.

**3.** Matériau composite de métal et de céramique selon la revendication 1 ou 2, **caractérisé en ce que** la phase métallique est un alliage d'aluminium exempt de magnésium.

**4.** Matériau composite de métal et de céramique selon l'une quelconque des revendications précédentes, **caractérisé en ce que** la matrice céramique contient au moins un oxyde d'un métal de transition, du silicium ou du carbure de bore.

**5.** Matériau composite de métal et de céramique selon l'une quelconque des revendications précédentes, **caractérisé en ce que** la matrice céramique contient de l'oxyde de titane.

**6.** Matériau composite de métal et de céramique selon l'une quelconque des revendications précédentes, **caractérisé en ce que** la couche intermédiaire contient de l'aluminure de titane.

**7.** Matériau composite de métal et de céramique selon l'une quelconque des revendications précédentes, **caractérisé en ce que** les pores de la matrice céramique qui sont remplis par la phase métallique ont un rayon compris entre 0,5 µm et 4 µm.

**8.** Matériau composite de métal et de céramique selon l'une quelconque des revendications précédentes, **caractérisé en ce que** les grains de la matrice céramique ont une granulométrie moyenne de 0,3 µm.

**9.** Procédé de fabrication d'un matériau composite de métal et de céramique selon l'une quelconque des revendications précédentes, qui comprend les étapes suivantes:

- façonnage d'une poudre céramique en un corps céramique poreux façonné,
- infiltration de métal liquide dans le corps façonné,
- réaction entre les particules céramiques et le métal liquide pour
- former une couche intermédiaire qui contient des produits de réaction du corps façonné en céramique et du métal,

la durée de contact entre le métal liquide et les particules céramiques étant inférieure à 10 s.

10. Procédé selon la revendication 9, **caractérisé en ce que** la poudre céramique est agglomérée en agglomérats d'un diamètre compris entre 5 μm et 50 μm.

11. Procédé selon la revendication 9 ou 10, **caractérisé en ce que** le façonnage du corps façonné s'effectue à la presse.

12. Procédé selon l'une quelconque des revendications 9 à 11, **caractérisé en ce que** l'infiltration s'effectue sous pression dans un outil de coulée sous pression.

Fig. 1